# EUROPEAN PATENT APPLICATION

(11) **EP 4 063 216 A1**
(43) Date of publication of application: **28.09.2022**
(21) Application number: 20838289.5
(22) Date of filing: 17.11.2020
(51) Int. Cl.: B60W 30/165

(54) **CONTROL SYSTEM, CONTROLLER, AND CONTROL METHOD**

(30) Priority: 20.11.2019 JP 2019209836
(71) Applicant: Robert Bosch GmbH, 70442 Stuttgart (DE)
(72) Inventor: YAMADA, Yasuo, Yokohama-shi, Kanagawa 224-8501 (JP)
(74) Representative: Isarpatent
(86) International application number: PCT/IB2020/060807
(87) International publication number: WO 2021/099931

(57) **Abstract**

The present invention obtains a control system, a controller, and a control method capable of appropriately controlling body behavior of plural motorcycles that travel in group. In a control system (1), a controller (12), and a control method according to the present invention, in plural motorcycles (10) to each of which an environment sensor (11) and the controller (12) are mounted and in each of which a control mode for controlling body behavior is executed by the controller (12) on the basis of output of the environment sensor (11), a first controller that is mounted to a first motorcycle of the plural motorcycles (10) transmits acquired information that is acquired during execution of the control mode to a second controller that is mounted to a second motorcycle other than the first motorcycle of the plural motorcycles (10), and the second controller receives the acquired information and executes the control mode on the basis of the acquired information.

## Description

### Technical Field

The present disclosure relates to a control system, a controller, and a control method capable of appropriately controlling body behavior of plural motorcycles that travel in a group.

### Background Art

Conventionally, various techniques of assisting with operation by a motorcycle rider have been proposed. For example, a driver assistance system is disclosed in PTL 1. Based on information detected by a sensor that detects an obstacle present in a travel direction or substantially in the travel direction, the driver assistance system warns the motorcycle rider that the motorcycle inappropriately approaches the obstacle.

### Citation List

### Patent Literature

PTL 1: JP-A-2009-116882

### Summary of Invention

### Technical Problem

By the way, as the technique of assisting with the operation, a technique of controlling body behavior on the basis of output of an environment sensor (for example, adaptive cruise control, emergency brake control, or the like) has been available. A posture of the motorcycle tends to become unstable when compared to a posture of another vehicle such as a four-wheeled automobile. Thus, stability of the motorcycle posture is likely to be deteriorated when acceleration/deceleration is automatically generated on the motorcycle in the control of the body behavior. For this reason, there is high necessity of appropriately controlling the body behavior of the motorcycle in order to prevent the stability of the motorcycle posture from being deteriorated. Here, in the case where group travel in which the plural motorcycles travel in a group is conducted, such a situation is assumed that the body behavior is controlled in each of the motorcycles. In such a situation, the body behavior of the motorcycle has a significant impact on the control of the body behavior of another motorcycle. Thus, the necessity of appropriately controlling the body behavior of the motorcycle is especially high.

The present invention has been made with the above-described problem as the background and therefore obtains a control system, a controller, and a control method capable of appropriately controlling body behavior of plural motorcycles that travel in a group.

### Solution to Problem

A control system according to the present invention is a control system for plural motorcycles to each of which an environment sensor and a controller are mounted and in each of which a control mode for controlling body behavior is executed by the controller on the basis of output of the environment sensor. A first controller that is mounted to a first motorcycle of the plural motorcycles transmits acquired information that is acquired during execution of the control mode to a second controller that is mounted to a second motorcycle other than the first motorcycle of the plural motorcycles. The second controller receives the acquired information and executes the control mode on the basis of the acquired information.

A controller according to the present invention is a controller mounted to a motorcycle to which an environment sensor is mounted and capable of executing a control mode for controlling body behavior of the motorcycle on the basis of output of the environment sensor, and transmits acquired information that is acquired during execution of the control mode to a controller that is mounted to a motorcycle other than the motorcycle.

A controller according to the present invention is a controller mounted to a motorcycle to which an environment sensor is mounted and capable of executing a control mode for controlling body behavior of the motorcycle on the basis of output of the environment sensor. The controller receives acquired information that is acquired by a controller mounted to a motorcycle other than the motorcycle during execution of a control mode for controlling body behavior of the other motorcycle on the basis of output of an environment sensor mounted to the other motorcycle, and executes the control mode in the motorcycle on the basis of the acquired information.

A control method according to the present invention is a control method for plural motorcycles to each of which an environment sensor and a controller are mounted and in each of which a control mode for controlling body behavior is executed by the controller on the basis of output of the environment sensor. A first controller that is mounted to a first motorcycle of the plural motorcycles transmits acquired information that is acquired during execution of the control mode to a second controller that is mounted to a second motorcycle other than the first motorcycle of the plural motorcycles. The second controller receives the acquired information and executes the control mode on the basis of the acquired information.

A control method according to the present invention is a control method for a controller mounted to a motorcycle to which an environment sensor is mounted and capable of executing a control mode for controlling body behavior of the motorcycle on the basis of output of the environment sensor. The controller receives acquired information that is acquired by a controller mounted to a motorcycle other than the motorcycle during execution of a control mode for controlling body behavior of the other motorcycle on the basis of output of an environment sensor mounted to the other motorcycle, and executes the control mode in the motorcycle on the basis of the acquired information.

### Advantageous Effects of Invention

In the control system, the controller, and the control method according to the present invention, in the plural motorcycles to each of which the environment sensor and the controller are mounted and in each of which the control mode for controlling the body behavior is executed by the controller on the basis of the output of the environment sensor, the first controller that is mounted to the first motorcycle of the plural motorcycles transmits the acquired information that is acquired during the execution of the control mode to the second controller that is mounted to the second motorcycle other than the first motorcycle of the plural motorcycles. The second controller receives the acquired information and executes the control mode on the basis of the acquired information. Accordingly, it is possible to share the acquired information among the plural motorcycles that travel in group and to use the shared acquired information for the control mode in each of the motorcycles. Therefore, it is possible to appropriately control the body behavior of the plural motorcycles that travel in group.

### Brief Description of Drawings

Fig. 1 is a schematic view illustrating an outline configuration of a control system according to an embodiment of the present invention.
Fig. 2 is a schematic view illustrating an outline configuration of a motorcycle to which a controller according to the embodiment of the present invention is mounted.
Fig. 3 is a block diagram illustrating an example of a functional configuration of the controller according to the embodiment of the present invention.
Fig. 4 is a flowchart illustrating an example of a processing procedure executed by the controller according to the embodiment of the present invention.

### Description of Embodiments

A description will hereinafter be made on a control system according to the present invention with reference to the drawings.

Hereinafter, a description will be made on a control system used for a two-wheeled motorcycle. However, the control system according to the present invention may be used for a motorcycle other than the two-wheeled motorcycle (for example, a three-wheeled motorcycle or the like).

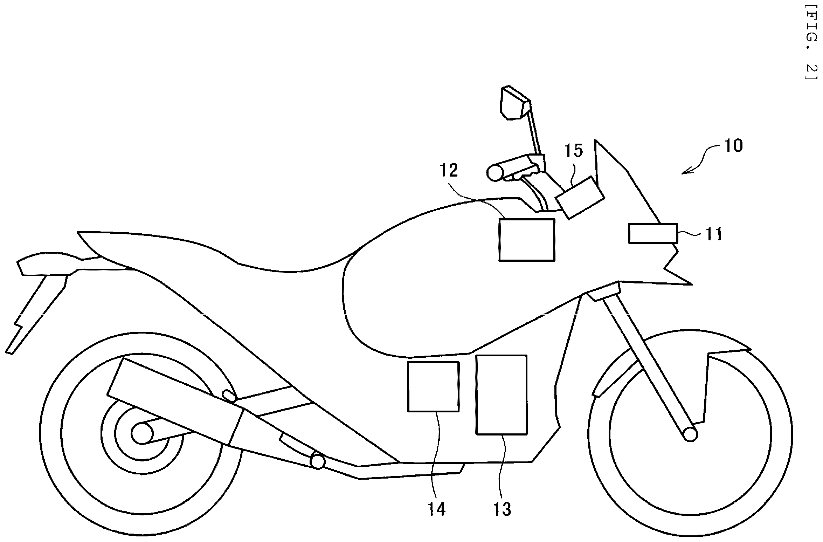

In addition, a description will hereinafter be made on a case where an engine (more specifically, an engine 13 in Fig. 2, which will be described below) is mounted as a drive source capable of outputting power for driving a wheel of the motorcycle. However, as the drive source of the motorcycle, a drive source other than the engine (for example, a motor) may be mounted, or plural drive sources may be mounted.

A description will be made on a case where a display (more specifically, a display 15 in Fig. 2, which will be described below) is used as a notification device that notifies a rider of various types of information. However, as the notification device, a notification device other than the display (for example, a sound output device, a vibration generator, or the like) may be used, or plural notification devices may be used.

A configuration, operation, and the like, which will be described below, merely constitute one example. The control system, the controller, and the control method according to the present invention are not limited to a case with such a configuration, such operation, and the like.

The same or similar description will appropriately be simplified or will not be made below. In the drawings, the same or similar members or portions will not be denoted by a reference sign or will be denoted by the same reference sign. In addition, a detailed structure will appropriately be illustrated in a simplified manner or will not be illustrated.

### <Configuration of Control System>

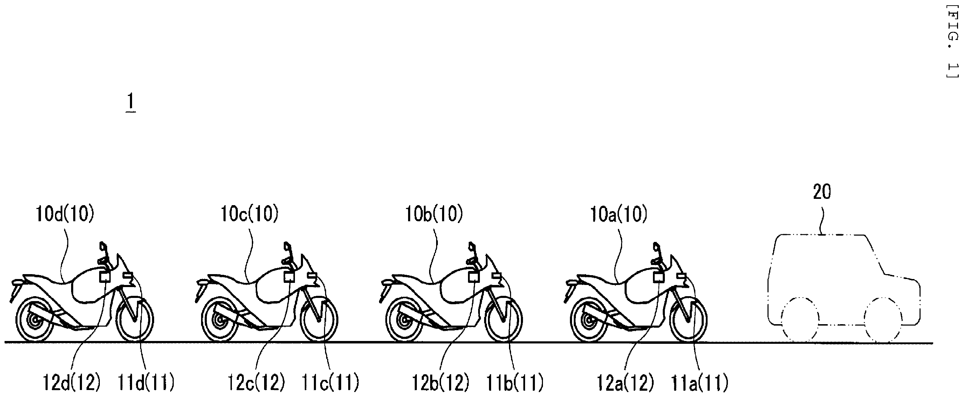

A description will be made on a configuration of a control system 1 according to the embodiment of the present invention with reference to Fig. 1 to Fig. 3.

Fig. 1 is a schematic view illustrating an outline configuration of the control system 1. As illustrated in Fig. 1, the control system 1 includes plural motorcycles 10 that travel in a group. Fig. 1 illustrates an example in which the four motorcycles 10 of a motorcycle 10a, a motorcycle 10b, a motorcycle 10c, and a motorcycle 10d are aligned in this order from the front (more specifically longitudinally aligned) to travel. The number of the motorcycles 10 included in the control system 1 may be a number other than four.

An environment sensor 11 and a controller 12 are mounted to each of the motorcycles 10. More specifically, an environment sensor 11a and a controller 12a are mounted to the motorcycle 10a. An environment sensor 11b and a controller 12b are mounted to the motorcycle 10b. An environment sensor 11c and a controller 12c are mounted to the motorcycle 10c. An environment sensor 11d and a controller 12d are mounted to the motorcycle 10d.

Each of the controllers 12 executes a control mode (for example, an adaptive cruise control mode, an emergency brake mode, or the like to be described below) for controlling body behavior on the basis of output of the environment sensor 11 mounted to the same motorcycle 10 as the controller 12. For example, the controller 12a for the motorcycle 10a executes the control mode on the basis of information on a preceding vehicle 20 that is a vehicle located in front of the motorcycle 10a, and such information is acquired on the basis of the output of the environment sensor 11a. The controllers 12b, 12c, 12d for the motorcycles 10b, 10c, 10d also execute the control mode on the basis of information on the motorcycles 10a, 10b, 10c that are respectively located in front of the motorcycles 10b, 10c, 10d, and such information is acquired on the basis of the output of the environment sensors 11b, 11c, 11d. Details of the control mode will be described below.

Fig. 2 is a schematic view of an outline configuration of the motorcycle 10. As illustrated in Fig. 2, the motorcycle 10 includes the environment sensor 11, the controller 12, the engine 13, a hydraulic pressure control unit 14, and the display 15.

The engine 13 corresponds to an example of a drive source of the motorcycle 10 and can output power for driving a wheel. For example, the engine 13 is provided with: one or plural cylinders, each of which is formed with a combustion chamber therein; a fuel injector that injects fuel into the combustion chamber; and an ignition plug. When the fuel is injected from the fuel injector, air-fuel mixture containing air and the fuel is produced in the combustion chamber, and the air-fuel mixture is then ignited by the ignition plug and burned. Consequently, a piston provided in the cylinder reciprocates to cause a crankshaft to rotate. In addition, a throttle valve is provided to an intake pipe of the engine 13, and an intake air amount for the combustion chamber varies according to a throttle opening amount as an opening degree of the throttle valve.

The hydraulic pressure control unit 14 is a unit that has a function of controlling a braking force to be generated on the wheel. For example, the hydraulic pressure control unit 14 includes components (for example, a control valve and a pump) that are provided on an oil channel connecting a master cylinder and a wheel cylinder and that control a brake hydraulic pressure of the wheel cylinder. The braking force to be generated on the wheel is controlled when operation of each of the components in the hydraulic pressure control unit 14 is controlled. The hydraulic pressure control unit 14 may control the braking force generated on each of a front wheel and a rear wheel or may only control the braking force generated on one of the front wheel and the rear wheel.

The display 15 is a device that visually provides the various types of the information, and is a liquid-crystal display, a lamp, or the like, for example. For example, the display 15 may show an object indicative of a vehicle speed, an object indicative of a remaining amount of the fuel, and the like. The display 15 corresponds to an example of the notification device, which notifies the rider of the various types of the information, according to the present invention. The display 15 is provided near a handlebar in a trunk of the motorcycle 10, for example.

The environment sensor 11 detects environment information on surrounding environment of the motorcycle 10 (more specifically, environment in front of the motorcycle 10) . More specifically, the environment sensor 11 detects a preceding vehicle that is a vehicle located in front of the motorcycle 10, and detects a distance from the motorcycle 10 to the preceding vehicle and a relative speed between the motorcycle 10 and the preceding vehicle. A detection result by the environment sensor 11 is used in the adaptive cruise control mode or the emergency brake mode, which will be described below.

The environment sensor 11 may detect another physical quantity that can substantially be converted to the distance from the motorcycle 10 to the preceding vehicle. In addition, the environment sensor 11 may detect another physical quantity that can substantially be converted to the relative speed between the motorcycle 10 and the preceding vehicle. The preceding vehicle is not limited to a vehicle that is the closest to the motorcycle 10 on the same lane as a travel lane of the motorcycle 10, and may also include a vehicle that travels on an adjacent lane to the travel lane of the motorcycle 10, and the like.

As the environment sensor 11, for example, a camera that captures an image in front of the motorcycle 10 and a radar that can detect a distance from the motorcycle 10 to a target in front are used. More specifically, the preceding vehicle is detected by using the image captured by the camera. Then, by using the detection result of the preceding vehicle and a detection result by the radar, the distance from the motorcycle 10 to the preceding vehicle and the relative speed between the motorcycle 10 and the preceding vehicle can be detected. The environment sensor 11 is provided to a front portion of the trunk of the motorcycle 10, for example.

The configuration of the environment sensor 11 is not limited to that in the above example. For example, the distance from the motorcycle 10 to the preceding vehicle and the relative speed between the motorcycle 10 and the preceding vehicle may be detected by using a stereo camera instead of the environment sensor 11.

The controller 12 controls behavior of the motorcycle 10.

For example, the controller 12 is partially or entirely constructed of a microcomputer, a microprocessor unit, or the like. Alternatively, the controller 12 may partially or entirely be constructed of a member in which firmware or the like can be updated, or may partially or entirely be a program module or the like that is executed by a command from a CPU or the like, for example. The controller 12 may be provided as one unit or may be divided into multiple units, for example.

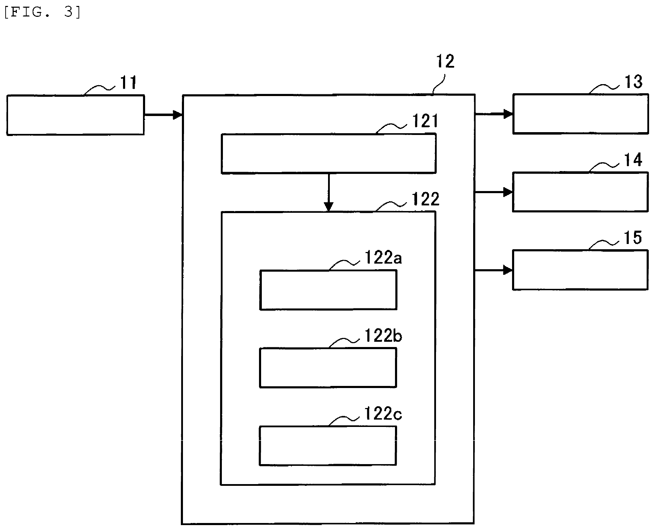

Fig. 3 is a block diagram illustrating an example of a functional configuration of the controller 12. As illustrated in Fig. 3, the controller 12 includes a communication section 121 and a control section 122, for example. The controller 12 communicates with each of the devices in the motorcycle 10 (for example, the environment sensor 11, the engine 13, the hydraulic pressure control unit 14, and the display 15). For example, the controller 12 can acquire the environment information on the surrounding environment of the motorcycle 10 on the basis of the output of the environment sensor 11.

The communication section 121 communicates with the controller 12 that is mounted to the motorcycle 10 other than the host vehicle. For example, the motorcycle 10 is provided with a communication device that can communicate with a device outside of the motorcycle 10, and the communication section 121 uses the communication device to communicate with the controller 12 that is mounted to another motorcycle 10. The communication section 121 may directly communicate with the controller 12 that is mounted to another motorcycle 10, or may indirectly communicate therewith via a server or the like.

More specifically, the communication section 121 can receive information acquired by the controller 12, which is mounted to another motorcycle 10, on the basis of the output of the environment sensor 11, which is mounted to another motorcycle 10, during execution of the control mode for controlling the body behavior of another motorcycle 10. In this case, the acquired information that is received by the communication section 121 is output to the control section 122 and is used for the control mode executed by the control section 122.

The control section 122 includes a drive control section 122a, a brake control section 122b, and a notification control section 122c, each of which functions in cooperation with a program, for example.

The drive control section 122a controls operation of each of the devices (for example, the throttle valve, the fuel injector, the ignition plug, and the like) in the engine 13. In this way, drive power that is transmitted from the engine 13 to the wheel of the motorcycle 10 is controlled, and acceleration of the motorcycle 10 is thereby controlled.

The brake control section 122b controls operation of each of the devices (for example, the control valve, the pump, and the like) in the hydraulic pressure control unit 14. In this way, the braking force that is generated on the wheel of the motorcycle 10 is controlled, and deceleration of the motorcycle 10 is thereby controlled.

The notification control section 122c controls operation of the notification device (for example, the display 15) so as to control notification of the various types of the information to the rider. More specifically, the notification control section 122c makes the rider recognize the various types of the information by controlling the operation of the display 15.

The control section 122 controls the operation of each of the devices mounted to the motorcycle 10 as described above and thereby controls the drive power and the braking force exerted on the motorcycle 10. In this way, the control section 122 can control the acceleration/deceleration of the motorcycle 10. More specifically, the control section 122 executes the control mode for controlling the body behavior on the basis of the output of the environment sensor 11. For example, the control section 122 executes the control mode according to an operation by the rider who uses an input device, such as a button or a switch, provided to the motorcycle 10.

For example, the control section 122 may execute the adaptive cruise control mode as the control mode. In the adaptive cruise control mode, vehicle speed maintenance control and inter-vehicular distance maintenance control are executed. In the vehicle speed maintenance control, the vehicle speed of the motorcycle 10 is maintained at a set speed. In the inter-vehicular distance maintenance control, an inter-vehicular distance between the motorcycle 10 and the preceding vehicle 20 is maintained to a set distance. The adaptive cruise control mode is a control mode in which the motorcycle 10 travels according to the distance from the motorcycle 10 to the preceding vehicle, motion of the motorcycle 10, and the rider's instruction.

In the adaptive cruise control mode, a magnitude of the acceleration/deceleration of the motorcycle 10 is controlled to be equal to or lower than such an upper limit value that does not excessively worsen the rider's comfort. The control section 122 may cancel the adaptive cruise control mode during execution of the adaptive cruise control mode as the control mode in the case where the rider performs a specific operation (for example, a brake operation).

In the adaptive cruise control mode, in the case where the preceding vehicle is detected, the inter-vehicular distance maintenance control is executed. In this way, the acceleration/deceleration of the motorcycles 10 is controlled such that the inter-vehicular distance between the motorcycle 10 and the preceding vehicle approximates the set distance. As the inter-vehicular distance between the motorcycle 10 and the preceding vehicle, the set distance is set to a value with which the rider's safety can be secured. Meanwhile, in the case where the preceding vehicle is not detected, the vehicle speed maintenance control is executed. As a result, the acceleration/deceleration of the motorcycle 10 is controlled such that the speed of the motorcycle 10 becomes the set speed.

In the inter-vehicular distance maintenance control, based on a comparison result between the set distance and the inter-vehicular distance between the motorcycle 10 and the preceding vehicle and on the relative speed between the motorcycle 10 and the preceding vehicle, the control section 122 determines target acceleration/deceleration with which the inter-vehicular distance between the motorcycle 10 and the preceding vehicle approximates the set distance. Then, the control section 122 controls the acceleration/deceleration of the motorcycle 10 to the target acceleration/deceleration. For example, in the case where the inter-vehicular distance between the motorcycle 10 and the preceding vehicle is longer than the set distance, the control section 122 determines, as the target acceleration/deceleration, the acceleration that corresponds to a difference between the set distance and the inter-vehicular distance between the motorcycle 10 and the preceding vehicle. On the other hand, in the case where the inter-vehicular distance between the motorcycle 10 and the preceding vehicle is shorter than the set distance, the control section 122 determines, as the target acceleration/deceleration, the deceleration that corresponds to the difference between the set distance and the inter-vehicular distance between the motorcycle 10 and the preceding vehicle.

The controller 12 can acquire the speed of the motorcycle 10 on the basis of a detection result by a wheel rotational frequency sensor that is provided to the motorcycle 10, for example. Even in the case where the preceding vehicle is detected, the control section 122 may control the acceleration/deceleration of the motorcycle 10 to the target acceleration/deceleration based on the set speed when the target acceleration/deceleration based on the set speed is lower than the target acceleration/deceleration based on the set distance, for example.

The control section 122 may execute the emergency brake mode as the control mode, for example. In the emergency brake mode, emergency brake control is executed to stop the motorcycle 10 at a position before an obstacle in front.

In the emergency brake control, based on a distance from the motorcycle 10 to the obstacle in front (for example, the inter-vehicular distance between the motorcycle 10 and the preceding vehicle) and on a relative speed between the motorcycle 10 and the obstacle in front (for example, the relative speed between the motorcycle 10 and the preceding vehicle), the control section 122 estimates duration before arrival that is duration required for the motorcycle 10 to reach the obstacle in front. In the case where the duration before arrival is shorter than a reference time, the control section 122 executes the emergency brake control and automatically decelerates and stops the motorcycle 10. The reference time is set as to be longer than duration that is estimated as duration required to stop the motorcycle 10 at the time when the emergency brake control is executed.

Here, in the control system 1, a first controller (for example, the controller 12a) that is mounted to a first motorcycle (for example, the motorcycle 10a) of the plural motorcycles 10 transmits the information acquired during the execution of the control mode to a second controller (for example, the controllers 12b, 12c, 12d) that is mounted to a second motorcycle (for example, the motorcycles 10b, 10c, 10d) other than the first motorcycle of the plural motorcycles 10. The second controller receives the acquired information and executes the control mode on the basis of the acquired information. As a result, it is possible to appropriately control the body behavior of the plural motorcycles 10 that travel in group. A detailed description will be made below on processing related to such information sharing among the motorcycles 10 during the execution of the control mode.

### <Operation of Control System>

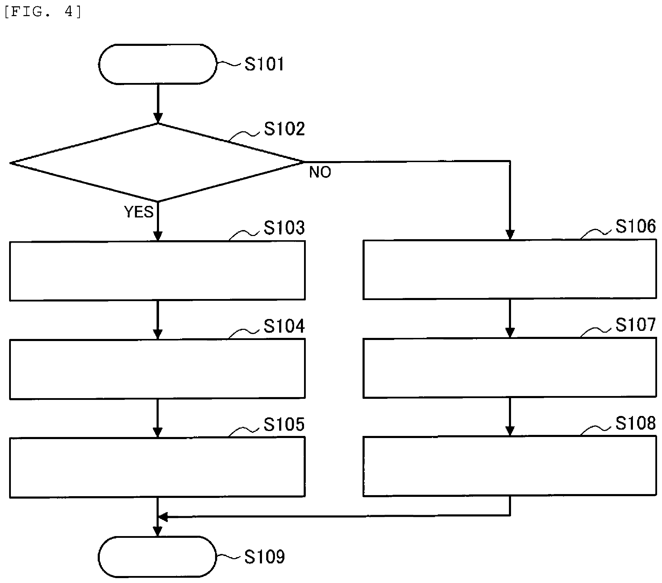

A description will be made on operation of the control system 1 according to the embodiment of the present invention with reference to Fig. 4.

A description will hereinafter be made on the processing related to the information sharing among the motorcycles 10 during the execution of the adaptive cruise control mode. However, the adaptive cruise control mode during the processing, which will be described below, can be replaced with another control mode. In addition, a description will hereinafter be made on an example in which the first motorcycle (that is, the motorcycle that transmits the acquired information) is a leading motorcycle of the plural motorcycles 10. However, the first motorcycle may be the motorcycle other than the leading motorcycle.

Fig. 4 is a flowchart illustrating an example of a processing procedure executed by the controller 12. More specifically, a control flow illustrated in Fig. 4 is repeatedly executed by the controller 12, which is mounted to each of the motorcycles 10, during the execution of the adaptive cruise control mode. Step S101 and step S109 in Fig. 4 respectively correspond to initiation and termination of the control flow illustrated in Fig. 4.

When the control flow illustrated in Fig. 4 is initiated, in step S102, the controller 12 determines whether the host vehicle is the leading first motorcycle (more specifically, the motorcycle 10a in the example illustrated in Fig. 1) of the plural motorcycles 10.

For example, each of the motorcycles 10 is provided with a location detector that uses a signal received from a Global Positioning System (GPS) satellite to detect a location of each motorcycle 10. The controllers 12 share location information of each of the motorcycles 10, which is acquired on the basis of output of the location detectors, via communication. In this case, each of the controllers 12 can determine whether the host vehicle is the first motorcycle (that is, the leading motorcycle) on the basis of the shared location information of the motorcycles 10. In the controller 12 of each of the motorcycles 10, discrimination information that is used to discriminate the accompanying motorcycles 10a, 10b, 10c, 10d may be registered and stored in advance prior to the travel. Then, the location information may only be exchanged among the controllers 12, in each of which the discrimination information is registered, in the motorcycles 10.

If the controller 12 determines that the host vehicle is the first motorcycle (step S102/YES), processing in step S103 to step S105 is executed. On the other hand, if the controller 12 determines that the host vehicle is the second motorcycle (more specifically, the motorcycle 10b, 10c, or 10d in the example illustrated in Fig. 1) other than the first motorcycle (step S102/NO) , processing in step S106 to step S108 is executed.

The processing in step S103 to step S105, which is executed when it is determined YES in step S102, is processing that is executed by the first controller (more specifically, the controller 12a in the example illustrated in Fig. 1) mounted to the first motorcycle. A description will hereinafter be made on the processing in step S103 to step S105 that is executed by the first controller.

If it is determined YES in step S102, in step S103, the communication section 121 in the first controller transmits the acquired information that is acquired during the execution of the adaptive cruise control mode to the second controller (more specifically, the controllers 12b, 12c, 12d in the example illustrated in Fig. 1) mounted to the second motorcycle (more specifically, the motorcycles 10b, 10c, 10d in the example illustrated in Fig. 1).

For example, the acquired information includes the environment information, which is acquired on the basis of the output of the environment sensor 11 (more specifically, the environment sensor 11a in the example illustrated in Fig. 1) in the first motorcycle.

The environment information may be information that is detected by the environment sensor 11 of the first motorcycle (for example, the distance from the motorcycle 10a to the preceding vehicle 20 and the relative speed between the motorcycle 10a and the preceding vehicle 20). Alternatively, the environment information may be secondary information that is acquired when the information detected by the environment sensor 11 of the first motorcycle is processed. For example, the first controller can acquire, as the secondary information, an index (for example, a numerical value) indicating a possibility of a collision of the first motorcycle with the preceding vehicle 20, which travels in front of the plural motorcycles 10, (for example, a possibility of a collision of the motorcycle 10a with the preceding vehicle 20) on the basis of the information detected by the environment sensor 11 of the first motorcycle.

In addition, the acquired information includes behavior information of the first motorcycle that is acquired in the first motorcycle, for example.

The behavior information can include a wide variety of information on behavior of the first motorcycle during the execution of the adaptive cruise control mode. For example, the behavior information may be on a speed of the first motorcycle during the execution of the adaptive cruise control mode. In addition, for example, the behavior information may be on the acceleration/deceleration of the first motorcycle during the execution of the adaptive cruise control mode. The first controller can acquire the acceleration/deceleration of the first motorcycle on the basis of a transition of the speed of the first motorcycle, for example. Furthermore, for example, the behavior information may be on a lean angle of the first motorcycle during the execution of the adaptive cruise control mode. The first controller can acquire the lean angle of the first motorcycle on the basis of a detection result by a lean angle sensor (for example, an inertial measurement unit (IMU) including a three-axis gyroscope sensor and a three-directional acceleration sensor) that is provided to the first motorcycle, for example.

Next, in step S104, the control section 122 in the first controller executes the adaptive cruise control mode on the basis of the environment information that is acquired on the basis of the output of the environment sensor 11 of the first motorcycle. More specifically, in the adaptive cruise control mode by the first controller, as described above, the environment information, which is acquired on the basis of the output of the environment sensor 11 of the first motorcycle, is used for the inter-vehicular distance maintenance control.

Next, in step S105, the control section 122 in the first controller controls notification operation to the rider of the first motorcycle, which is performed by the display 15 mounted to the first motorcycle, on the basis of the environment information, which is acquired on the basis of the output of the environment sensor 11 of the first motorcycle. Then, the control flow illustrated in Fig. 4 is terminated. The control of the notification operation also includes control for changing contents of the notification (for example, control for changing display contents of the display 15).

For example, in the case where the relatively high deceleration is generated on the first motorcycle on the basis of the environment information that is acquired on the basis of the output of the environment sensor 11 of the first motorcycle, the control section 122 in the first controller causes the display 15 to show such a fact. In this way, it is possible to make the rider of the first motorcycle recognize in advance that the relatively high deceleration is generated on the first motorcycle. Just as described, when the notification operation, which is performed by the display 15, is controlled on the basis of the environment information, it is possible to appropriately make the rider recognize information on the future body behavior of the first motorcycle. As a result, it is possible to suppress a posture of the first motorcycle from becoming unstable.

The processing in step S106 to step S108, which is executed when it is determined NO in step S102, is processing that is executed by the second controller (more specifically, the controllers 12b, 12c, 12d in the example illustrated in Fig. 1) mounted to the second motorcycle (more specifically, the motorcycles 10b, 10c, 10d in the example illustrated in Fig. 1). A description will hereinafter be made on the processing in step S106 to step S108 that is executed by the second controller.

If it is determined NO in step S102, in step S106, the communication section 121 in the second controller receives the acquired information that is transmitted from the communication section 121 of the first controller (more specifically, the controller 12a in the example illustrated in Fig. 1).

Next, in step S107, the control section 122 in the second controller executes the adaptive cruise control mode on the basis of the received acquired information. The control section 122 in the second controller may execute the adaptive cruise control mode by using the acquired information only or may execute the adaptive cruise control mode by using the acquired information and information other than the acquired information.

Here, the second controller preferably executes the adaptive cruise control mode on the basis of the received acquired information and the environment information that is acquired on the basis of the output of the environment sensor 11 (more specifically, the environment sensors 11b, 11c, 11d in the example illustrated in Fig. 1) of the second motorcycle. For example, based on the received acquired information and the environment information, which is acquired on the basis of the output of the environment sensor 11 of the second motorcycle, the second controller determines the target acceleration/deceleration in the inter-vehicular distance maintenance control and controls the acceleration/deceleration of the second motorcycle to the target acceleration/deceleration.

Just as described, the second controller can execute the adaptive cruise control mode by using the acquired information, which is acquired in the first motorcycle, in addition to the environment information acquired on the basis of the output of the environment sensor 11 of the second motorcycle. Accordingly, compared to a case where the acquired information is not used for the adaptive cruise control mode, it is possible to execute the adaptive cruise control mode on the basis of a lot of the information on the surrounding environment of the second motorcycle. As a result, it is possible to further appropriately control the body behavior of the second motorcycle.

For example, the second controller can generate the deceleration on the second motorcycle at timing that corresponds to timing at which the deceleration is generated on the first motorcycle (for example, at the same time as the timing at which the first motorcycle starts decelerating or before such timing). In this way, generation of the excessively high deceleration on the second motorcycle, which is caused by excess shortening of the inter-vehicular distance between the second motorcycle and the preceding vehicle, can be suppressed. As a result, it is possible to appropriately suppress a posture of the second motorcycle from becoming unstable.

As described above, the first motorcycle is the leading motorcycle of the plural motorcycles 10. Accordingly, by using the acquired information, which is acquired by the first motorcycle, for the adaptive cruise control mode, the second controller can optimize the control of the body behavior of the second motorcycle according to the body behavior of the first motorcycle or the body behavior of the preceding vehicle 20, which travels in front of the plural motorcycles 10a, 10b, 10c, 10d.

Next, in step S108, the control section 122 in the second controller controls the notification operation to the rider of the second motorcycle, which is performed by the display 15 mounted to the second motorcycle, on the basis of the received acquired information. Then, the control flow illustrated in Fig. 4 is terminated. As described above, the control of the notification operation also includes the control for changing the contents of the notification (for example, the control for changing the display contents of the display 15).

For example, in the case where the relatively high deceleration is generated on the second motorcycle as a result of executing the adaptive cruise control mode by using the received acquired information, the control section 122 in the second controller causes the display 15 to show such a fact. In this way, it is possible to make the rider of the second motorcycle recognize in advance that the relatively high deceleration is generated on the second motorcycle. Just as described, when the notification operation, which is performed by the display 15, is controlled on the basis of the received acquired information, it is possible to appropriately make the rider recognize information on the future body behavior of the second motorcycle. As a result, it is possible to suppress the posture of the second motorcycle from becoming unstable.

The above description has been made on the processing related to the information sharing among the motorcycles 10 during the execution of the adaptive cruise control mode. However, the adaptive cruise control mode during the processing, which has been described above, can be replaced with the emergency brake mode, for example.

Here, the control mode such as the emergency brake mode may include: a monitoring process in which necessity of the control of the body behavior executed by the motorcycle 10 is monitored (for example, when the emergency brake control is not executed in the emergency brake mode); and an execution process in which the control of the body behavior is executed by the motorcycle 10 (for example, when the emergency brake control is executed in the emergency brake mode). In such a case, the first controller may transmit acquired information that is acquired during the monitoring process to the second controller. In addition, the first controller may transmit acquired information that is acquired during the execution process to the second controller.

The above description has been made on the example in which the first motorcycle is the leading motorcycle of the plural motorcycles 10. However, the first motorcycle may be the last motorcycle of the plural motorcycles 10, for example. For example, an environment sensor that detects environment information on environment behind the motorcycle 10 as the surrounding environment can be mounted to each of the motorcycles 10. Such an environment sensor detects a following vehicle that is a vehicle located behind the motorcycle 10 (for example, a vehicle that travels behind the motorcycle 10 and travels on the adjacent lane to the travel lane of the motorcycle 10), and detects a distance from the motorcycle 10 to the following vehicle and a relative speed between the motorcycle 10 and the following vehicle.

The environment sensor may detect another physical quantity that can substantially be converted to the distance from the motorcycle 10 to the following vehicle. In addition, the environment sensor may detect another physical quantity that can substantially be converted to the relative speed between the motorcycle 10 and the following vehicle. As the environment sensor, for example, a camera that captures an image behind the motorcycle 10 and a radar that can detect a distance from the motorcycle 10 to a target behind the motorcycle 10 are used.

In the case where the first motorcycle is the last motorcycle (more specifically, the motorcycle 10d in the example illustrated in Fig. 1) of the plural motorcycles 10, the first controller (more specifically, the controller 12d in the example illustrated in Fig. 1) mounted to the first motorcycle transmits the acquired information that is acquired during the execution of the control mode to the second controller (more specifically, the controllers 12a, 12b, 12c in the example illustrated in Fig. 1) mounted to the second motorcycle (more specifically, the motorcycles 10a, 10b, 10c in the example illustrated in Fig. 1) . Then, the second controller executes the control mode on the basis of the received acquired information. For example, similar to the example that has been described with reference to Fig. 4, the second controller determines the target acceleration/deceleration in the control mode on the basis of the received acquired information and the environment information that is acquired on the basis of the output of the environment sensor 11 of the second motorcycle, and controls the acceleration/deceleration of the second motorcycle to the target acceleration/deceleration.

By using the acquired information, which is acquired by the first motorcycle as the last motorcycle of the plural motorcycles 10, for the control mode, the second controller can optimize the control of the body behavior of the second motorcycle according to the body behavior of the first motorcycle or body behavior of the following vehicle traveling behind the plural motorcycles 10a, 10b, 10c, 10d.

### <Effects of Control System>

A description will be made on effects of the control system 1 according to the embodiment of the present invention.

In the control system 1, the first controller (for example, the controller 12a), which is mounted to the first motorcycle (for example, the motorcycle 10a) of the plural motorcycles 10, transmits the acquired information, which is acquired during the execution of the control mode (for example, the above-described adaptive cruise control mode, the above-described emergency brake mode, or the like), to the second controller (for example, the controllers 12b, 12c, 12d) mounted to the second motorcycle (for example, the motorcycle 10b, 10c, 10d) other than the first motorcycle of the plural motorcycles 10. The second controller receives the acquired information and executes the control mode on the basis of the acquired information. In this way, it is possible to share the acquired information among the plural motorcycles 10 that travel in group and to use the shared acquired information for the control mode in each of the motorcycles 10. More specifically, it is possible to use the information on the surrounding environment of the second motorcycle, which cannot be acquired by the second motorcycle itself, for the control mode in the second motorcycle. As a result, it is possible to appropriately control the body behavior of the plural motorcycles 10 that travel in group.

Preferably, in the control system 1, the acquired information includes the environment information that is acquired on the basis of the output of the environment sensor 11 of the first motorcycle. Accordingly, it is possible to share the environment information among the plural motorcycles 10 that travel in group and to use the shared environment information for the control mode in each of the motorcycles 10. More specifically, it is possible to use the environment information as the information on the surrounding environment of the second motorcycle, which cannot be acquired by the second motorcycle itself, for the control mode in the second motorcycle. As a result, it is possible to further appropriately control the body behavior of the plural motorcycles 10 that travel in group.

Preferably, in the control system 1, the acquired information includes the behavior information of the first motorcycle that is acquired by the first motorcycle. Accordingly, it is possible to share the behavior information among the plural motorcycles 10 that travel in group and to use the shared behavior information for the control mode in each of the motorcycles 10. More specifically, it is possible to use the behavior information as the information on the behavior of the second motorcycle, which cannot be acquired by the second motorcycle itself, for the control mode in the second motorcycle. As a result, it is possible to further appropriately control the body behavior of the plural motorcycles 10 that travel in group.

Preferably, in the control system 1, the second controller executes the control mode on the basis of the acquired information and the environment information that is acquired on the basis of the output of the environment sensor 11 of the second motorcycle. Accordingly, the second controller can execute the control mode by using the acquired information, which is acquired in the first motorcycle, in addition to the environment information acquired on the basis of the output of the environment sensor 11 mounted to the second controller. Thus, compared to the case where the acquired information is not used for the control mode, it is possible to execute the control mode on the basis of a lot of the information on the surrounding environment of the second motorcycle. As a result, it is possible to further appropriately control the body behavior of the second motorcycle.

Preferably, in the control system 1, the control mode includes the monitoring process in which the necessity of the control of the body behavior executed by the motorcycle 10 is monitored, and the first controller transmits the acquired information, which is acquired during the monitoring process, to the second controller. Accordingly, in the case where the control mode in the first motorcycle is the monitoring process, it is possible to share the acquired information among the plural motorcycles 10 that travel in group and to use the shared acquired information for the control mode in each of the motorcycles 10. As a result, the acquired information is transmitted to the second motorcycle before the control of the body behavior is executed in the first motorcycle. Therefore, it is possible to promptly execute the control that is based on the acquired information on the body behavior of the second motorcycle.

Preferably, in the control system 1, the control mode includes the execution process in which the control of the body behavior is executed by the motorcycle 10, and the first controller transmits the acquired information, which is acquired during the execution process, to the second controller. Accordingly, in the case where the control mode in the first motorcycle is the execution process, it is possible to share the acquired information among the plural motorcycles 10 that travel in group and to use the shared acquired information for the control mode in each of the motorcycles 10. As a result, the acquired information is transmitted to the second motorcycle in a process of actually executing the control of the body behavior in the first motorcycle. Therefore, it is possible to further optimize the control that is based on the acquired information on the body behavior of the second motorcycle.

Preferably, in the control system 1, the control mode includes the adaptive cruise control mode, and in the adaptive cruise control mode, the vehicle speed maintenance control for maintaining the vehicle speed of the motorcycle 10 at the set speed and the inter-vehicular distance maintenance control for maintaining the inter-vehicular distance between the motorcycle 10 and the preceding vehicle to the set distance are executed. Accordingly, it is possible to use the acquired information, which is shared among the motorcycles 10 traveling in group, for the adaptive cruise control mode in each of the motorcycles 10. More specifically, it is possible to use the information on the surrounding environment of the second motorcycle, which cannot be acquired by the second motorcycle itself, for the adaptive cruise control mode in the second motorcycle. As a result, in the case where each of the motorcycles 10 executes the adaptive cruise control mode, it is possible to appropriately control the body behavior of the plural motorcycles 10 that travel in group.

Preferably, in the control system 1, the control mode includes the emergency brake mode, in which the emergency brake control is executed to stop the motorcycle 10 at the position before the obstacle in front. Accordingly, it is possible to use the acquired information, which is shared among the plural motorcycles 10 traveling in group, for the emergency brake mode in each of the motorcycles 10. More specifically, it is possible to use the information on the surrounding environment of the second motorcycle, which cannot be acquired by the second motorcycle itself, for the emergency brake mode in the second motorcycle. As a result, in the case where each of the motorcycles 10 executes the emergency brake mode, it is possible to appropriately control the body behavior of the plural motorcycles 10 that travel in group.

Preferably, in the control system 1, in the control mode, the second controller controls the notification operation to the rider of the second motorcycle, which is performed by the notification device (for example, the display 15) mounted to the second motorcycle, on the basis of the acquired information. Accordingly, it is possible to use the information on the surrounding environment of the second motorcycle, which cannot be acquired by the second motorcycle itself, for the control of the notification operation to the rider of the second motorcycle. As a result, it is possible to appropriately make the rider recognize the information on the future body behavior of the second motorcycle. Therefore, it is possible to suppress the posture of the second motorcycle from becoming unstable.

Preferably, in the control system 1, the first motorcycle is the leading motorcycle (for example, the motorcycle 10a in Fig. 1) of the plural motorcycles 10. Accordingly, it is possible to optimize the control of the body behavior of the second motorcycle according to the body behavior of the first motorcycle or the body behavior of the preceding vehicle 20, which travels in front of the plural motorcycles 10a, 10b, 10c, 10d.

Preferably, in the control system 1, the first motorcycle is the last motorcycle (for example, the motorcycle 10d in Fig. 1) of the plural motorcycles 10. Accordingly, it is possible to optimize the control of the body behavior of the second motorcycle according to the body behavior of the first motorcycle or the body behavior of the following vehicle, which travels behind the plural motorcycles 10a, 10b, 10c, 10d.

The present invention is not limited to the embodiment that has been described. For example, the embodiment may only be implemented partially. In addition, for example, an order of steps in the control flow illustrated in Fig. 4 may be switched. For example, an order of steps S103, S104, S105 may be an unprescribed order, and step S107 and step S108 may be replaced with each other.

### Reference Signs List

1: Control system
10, 10a, 10b, 10c, 10d: Motorcycle
11, 11a, 11b, 11c, 11d: Environment sensor
12, 12a, 12b, 12c, 12d: Controller
13: Engine
14: Hydraulic pressure control unit
15: Display
20: Preceding vehicle
121: Communication section
122: Control section
122a: Drive control section
122b: Brake control section
122c: Notification control section

## Claims

1. A control system (1) for plural motorcycles (10) to each of which an environment sensor (11) and a controller (12) are mounted and in each of which a control mode for controlling body behavior is executed by the controller (12) on the basis of output of the environment sensor (11), wherein
a first controller that is mounted to a first motorcycle of the plural motorcycles (10) transmits acquired information that is acquired during execution of the control mode to a second controller that is mounted to a second motorcycle other than the first motorcycle of the plural motorcycles (10), and
the second controller receives the acquired information and executes the control mode on the basis of the acquired information.

2. The control system according to claim 1, wherein
the acquired information includes environment information that is acquired on the basis of the output of the environment sensor (11) of the first motorcycle.

3. The control system according to claim 1 or 2, wherein
the acquired information includes behavior information of the first motorcycle that is acquired in the first motorcycle.

4. The control system according to any one of claims 1 to 3, wherein
the second controller executes the control mode on the basis of the acquired information and environment information that is acquired on the basis of the output of the environment sensor (11) of the second motorcycle.

5. The control system according to any one of claims 1 to 4, wherein
the control mode includes a monitoring process in which necessity of control of the body behavior executed by the motorcycle (10) is monitored, and
the first controller transmits the acquired information that is acquired during the monitoring process to the second controller.

6. The control system according to any one of claims 1 to 5, wherein
the control mode includes an execution process in which the control of the body behavior is executed by the motorcycle (10), and
the first controller transmits the acquired information that is acquired during the execution process to the second controller.

7. The control system according to any one of claims 1 to 6, wherein
the control mode includes an adaptive cruise control mode in which a vehicle speed maintenance control for maintaining a vehicle speed of the motorcycle (10) at a set speed and an inter-vehicular distance maintenance control for maintaining an inter-vehicular distance between the motorcycle (10) and a preceding vehicle to a set distance are executed.

8. The control system according to any one of claims 1 to 7, wherein
the control mode includes an emergency brake mode in which emergency brake control is executed to stop the motorcycle (10) at a position before an obstacle in front.

9. The control system according to claim 7 or 8, wherein
in the control mode, the second controller controls notification operation to a rider of the second motorcycle that is executed by a notification device (15) mounted to the second motorcycle on the basis of the acquired information.

10. The control system according to any one of claims 1 to 9, wherein
the first motorcycle is a leading motorcycle (10a) of the plural motorcycles (10).

11. The control system according to any one of claims 1 to 9, wherein
the first motorcycle is a last motorcycle (10d) of the plural motorcycles (10).

12. A controller (12) mounted to a motorcycle (10) to which an environment sensor (11) is mounted and capable of executing a control mode for controlling body behavior of the motorcycle (10) on the basis of output of the environment sensor (11), and
transmitting acquired information that is acquired during execution of the control mode to a controller (12) that is mounted to a motorcycle (10) other than the motorcycle (10) .

13. A controller (12) mounted to a motorcycle (10) to which an environment sensor (11) is mounted and capable of executing a control mode for controlling body behavior of the motorcycle (10) on the basis of output of the environment sensor (11), wherein
the controller (12) receives acquired information that is acquired by a controller (12) mounted to a motorcycle (10) other than the motorcycle (10) during execution of a control mode for controlling body behavior of the other motorcycle (10) on the basis of output of an environment sensor (11) mounted to the other motorcycle (10), and executes the control mode in the motorcycle (10) on the basis of the acquired information.

14. A control method for plural motorcycles (10) to each of which an environment sensor (11) and a controller (12) are mounted and in each of which a control mode for controlling body behavior is executed by the controller (12) on the basis of output of the environment sensor (11), wherein
a first controller that is mounted to a first motorcycle of the plural motorcycles (10) transmits acquired information that is acquired during execution of the control mode to a second controller that is mounted to a second motorcycle other than the first motorcycle of the plural motorcycles (10), and
the second controller receives the acquired information and executes the control mode on the basis of the acquired information.

15. A control method for a controller (12) mounted to a motorcycle (10) to which an environment sensor (11) is mounted and capable of executing a control mode for controlling body behavior of the motorcycle (10) on the basis of output of the environment sensor (11), wherein
the controller (12) receives acquired information that is acquired by a controller (12) mounted to a motorcycle (10) other than the motorcycle (10) during execution of a control mode for controlling body behavior of the other motorcycle (10) on the basis of output of an environment sensor (11) mounted to the other motorcycle (10), and executes the control mode in the motorcycle (10) on the basis of the acquired information.
